# EUROPÄISCHE PATENTSCHRIFT

(11) **EP 2 420 406 B1**
(45) Veröffentlichungstag und Bekanntmachung des Hinweises auf die Patenterteilung: **07.03.2018**
(21) Anmeldenummer: 11006677.6
(22) Anmeldetag: 15.08.2011
(51) Int. Cl.: B60P 7/15, B60P 7/08

(54) **Vorrichtung zum Sichern von Ladung auf einer Ladefläche eines Fahrzeugaufbaus**
Device for securing loads on a load surface of a vehicle structure
Dispositif de sécurisation d'un chargement sur la surface de chargement d'un montage de véhicule

(30) Priorität: 16.08.2010 DE 202010011440 U
(43) Veröffentlichungstag der Anmeldung: 22.02.2012
(73) Patentinhaber: Fahrzeugbau Karl Tang GmbH, 40721 Hilden (DE)
(72) Erfinder: Böckmann, Udo, 42653 Solingen (DE)
(74) Vertreter: Isfort, Olaf

(56) Entgegenhaltungen:
- EP-A1- 0 296 085
- DE-A1- 10 055 963
- DE-U1-202008 005 307
- DE-U1-202009 007 027
- US-A- 3 906 871
- US-A- 4 650 382

## Beschreibung

Die Erfindung betrifft eine Vorrichtung zum Sichern von Ladung auf einer Ladefläche eines Fahrzeugsaufbaus, aufweisend wenigstens eine zumindest über einen Teil der Längserstreckung des Fahrzeugaufbaus verlaufende Schiene, die einen sich über die Längserstreckung der Schiene verlaufenden, an der Innenseite einer Seitenwand des Fahrzeugaufbaus befestigbaren oberen Befestigungsabschnitt und einen über die Längserstreckung der Schiene verlaufenden, mit dem Boden des Fahrzeugaufbaus und/oder einem unter dem Boden angeordneten Tragrahmenelement verbindbaren unteren Befestigungsabschnitt umfasst, wobei der obere Befestigungsabschnitt über einen über die Längserstreckung der Schiene verlaufenden Sicherungsabschnitt mit dem unteren Befestigungsabschnitt verbunden ist, und wobei der untere Befestigungsabschnitt bei bestimmungsgemäßer Anordnung der Vorrichtung an dem Fahrzeugaufbau zumindest teilweise unter dem Boden des Fahrzeugaufbaus angeordnet ist.

Die Erfindung betrifft zudem einen Fahrzeugaufbau.

Aus DE 20 2008 005 307 U1 ist eine herkömmliche Schiene zur Ladungssicherung bekannt. Diese Schiene hat sowohl die Funktion des Schutzes der Seitenwand des Fahrzeugaufbaus gegen Anschrammen oder Anstoßen von Ladung beim Be- und Entladen als auch die Funktion der Sicherung von Ladung auf der Ladefläche des Fahrzeugaufbaus. Hierzu weist die Schiene einen Sicherungsabschnitt auf, welcher im Wesentlichen waagerecht angeordnet ist und in dem Ausnehmungen ausgebildet sind, in die herkömmliche Sicherungsmittel eingreifen können. Hierzu weisen die Ausnehmungen eine an die Formgebung der Sicherungsmittel angepasste spezielle Formgebung auf.

Nachteilig bei einer derartig ausgebildeten Schiene ist zum Einen, dass diese nur mit bestimmten herkömmlichen Sicherungsmitteln kombinierbar ist. Die Schiene ist insbesondere nicht sehr geeignet, über Zurrhaken mit Zurrgurten zusammenzuwirken. Dieses trifft sowohl für die Aufnahme der hohen Zurrkräfte, als auch bezüglich der sicheren und zuverlässigen Verbindung zwischen Schiene und Zurrhaken zu. Die hohen Zurrkräfte können zur Verformung und damit zu einem Lösen der Verbindung zwischen Zurrhaken und Schiene führen. Ferner ist bei der beschriebenen Schiene gemäß DE 20 2008 005 307 U1 nachteilig, dass beim Einbau der Schiene in einen Fahrzeugaufbau der vorhandene Boden des Fahrzeugaufbaus verkleinert werden muss, da der Sicherungsabschnitt der Schiene in der Ebene des Bodens angeordnet ist. Aufgrund dieser Anordnung der Schiene und der begrenzten Platzverhältnisse sind Adapter erforderlich, welche ein Sicherungsmittel mit der Schiene verbinden. Die Form der Ausnehmungen in der Schiene sind daher an die Form solcher herkömmlicher Adapter angepasst.

Die Druckschrift EP 0 296 085 A1 zeigt eine seitlich an einer Ladefläche vorgesehene Profilschiene, an welcher Zurrhaken mittels in regelmäßigen Abständen in Längserstreckung der Profilschiene angeordneten Aussparungen fixierbar sind, wobei die Aussparungen in einem Profilabschnitt der Profilschiene angeordnet sind, welcher sich von unten nach oben schräg nach außen weg von der Ladefläche erstreckt.

Das Patent US 3,906,871 A zeigt eine Art Lochplatte für Fahrzeuge oder Container zur Anordnung an einer Seitenwand eines Laderaums des Fahrzeugs oder des Containers, wobei die Lochplatte dazu ausgebildet ist, entweder mit einer den Laderaum durchkreuzenden Strebe oder einzelnen Haken gekoppelt zu werden, um Frachtgut zu fixieren. Die Lochplatte weist eine Vielzahl gleicher Aussparungen, Löcher oder Durchführungen auf, in welchen die Strebe oder die Haken befestigt werden können.

Die Druckschrift DE 100 55 963 A1 zeigt einen Träger für ein Fahrzeug mit einem Ladeboden, welcher den Ladeboden seitlich als eine Art Rahmenprofil einfasst und abschnittsweise als ein V-Profil ausgebildet ist, durch welches eine Zurrnut definiert ist, in welche Zurrhaken eingehakt werden können. Die Zurrhaken können mit einem oder mehreren Bolzen versehen sein, welche zwecks formschlüssiger Verbindung in entsprechenden Bolzenaufnahmeöffnungen an dem V-Profil lagerbar sind.

Ausgehend von diesem Stand der Technik ist es die Aufgabe der vorliegenden Erfindung, eine neuartige Vorrichtung zum Sichern der Ladung auf einer Ladefläche eines Fahrzeugaufbaus bereitzustellen, welche zuverlässig und wirkungsvoll mit unterschiedlichsten Ausgestaltungen von Sicherungsmitteln kombinierbar und ohne bauliche Änderungen an einem Fahrzeugaufbau an diesem anordbar ist.

Diese Aufgabe wird bei einer Vorrichtung der eingangs genannten Art dadurch gelöst, dass der Sicherungsabschnitt bei bestimmungsgemäßer Anordnung der Vorrichtung an dem Fahrzeugaufbau oberhalb des Bodens angeordnet ist und einen über die Längserstreckung der Schiene verlaufenden Zurrabschnitt aufweist, der an seinem oberen Ende einen größeren Abstand zur Seitenwand des Fahrzeugaufbaus aufweist als an seinem unteren Ende, wobei an dem Zurrabschnitt entlang seiner Längserstreckung mehrere Zurröffnungen ausgebildet sind.

Erfindungsgemäß wird somit eine Vorrichtung zum Sichern von Ladung auf einer Ladefläche eines Fahrzeugaufbaus geschaffen, deren Sicherungsabschnitt oberhalb von dem Boden des Fahrzeugaufbaus angeordnet ist, so dass der Boden seine Originalmaße beibehalten kann und keine Bearbeitung des Bodens beim Einbau der Vorrichtung in einen Fahrzeugaufbau notwendig ist. Durch die erfindungsgemäß geneigte Stellung des Zurrabschnitts relativ zu der Seitenwand des Fahrzeugaufbaus wird zudem ein spielfreies Zusammenwirken von Zurrhaken mit dem Zurrabschnitt ermöglicht, so dass die oben beschriebenen Nachteile nicht auftreten können. Ein Lösen der Verbindung von Zurrhaken und Zurrabschnitt kann somit weitestgehend vermieden werden. Die auftretenden Zurrkräfte wirken gemäß der Erfindung in der Ebene des Zurrabschnitts. Hierdurch können Verformungen der Schiene durch die hohen Zurrkräfte vermieden werden. Bei der oben beschriebenen Schiene gemäß DE 20 2008 005 307 U1 wirken die Zurrkräfte quer zum Sicherungsabschnitt, so dass es schon bei relativ geringen Zurrkräften zu Verformungen der Schiene kommen kann.

Die Vorrichtung zum Sichern von Ladung auf einer Ladefläche eines Fahrzeugaufbaus weist vorzugsweise zwei über die Längserstreckung des Fahrzeugaufbaus verlaufende Schienen auf, welche jeweils an einer Längsseite des Bodens des Fahrzeugaufbaus anordbar sind. Die Sicherungsabschnitte der erfindungsgemäßen Schienen weisen auch die Funktion des Schutzes der Seitenwand des Fahrzeugaufbaus gegen Anschrammen oder Abstoßen von Ladung beim Be- oder Entladen des Fahrzeugaufbaus auf.

Unter dem Begriff "Fahrzeug" soll gemäß der Erfindung sowohl ein motorisiertes Fahrzeug, wie beispielsweise ein Lastkraftwagen, als auch ein unmotorisiertes Fahrzeug, wie beispielsweise ein Anhänger, verstanden werden. Der Begriff "Aufbau" soll gemäß der Erfindung verschiedenste Ausgestaltungen von Containern und Wechselaufbauten umfassen.

Gemäß einer vorteilhaften Ausgestaltung der Erfindung sind die Zurröffnungen als Lochdüsen ausgebildet. Solche Lochdüsen sind vorzugsweise kreisförmig ausgebildet. Bei der Ausbildung dieser Lochdüsen an dem Zurrabschnitt wird Material derart verdrängt, dass die Stärke des Zurrabschnitts im Bereich der Umrandung einer Lochdüse größer, beispielsweise doppelt so groß, ist als im übrigen Bereich des Zurrabschnitts, wodurch die Formstabilität des Zurrabschnitts im Bereich einer Lochdüse deutlich erhöht wird. Zurrgurte können über Zurrhaken mit der Schiene verbunden werden, in dem die Zurrhaken in die Lochdüsen eingefügt werden. Anschließend können sehr hohe Zurrkräfte zur Sicherung der Ladung auf der Ladefläche des Fahrzeugaufbaus aufgebracht werden, ohne dass es an der Schiene zu Verformungen oder anderen Schäden kommen kann.

Eine weitere vorteilhafte Ausgestaltung der Erfindung sieht vor, dass der Sicherungsabschnitt einen über die Längserstreckung der Schiene verlaufenden Sperrabschnitt aufweist, der zwischen dem oberen Befestigungsabschnitt und dem Zurrabschnitt angeordnet ist und der entlang seiner Längserstreckung mehrere Sperröffnungen aufweist, wobei der Sperrabschnitt sich in einer parallel und beabstandet zur Ebene der Seitenwand des Fahrzeugaufbaus angeordneten Ebene erstreckt, in der das obere Ende des Zurrabschnitts angeordnet ist. Die Schiene der Vorrichtung kann somit sowohl mit unterschiedlichsten verzurrenden Sicherungsmitteln als auch mit Sperrstangen, insbesondere teleskopierbaren Sperrstangen, zusammenwirken, deren Enden in die Sperröffnungen eingefügt werden können. Der Sperrabschnitt weist des Weiteren noch die Funktion des Schutzes der Seitenwand des Fahrzeugaufbaus gegen Anschrammen oder Abstoßen von Ladung beim Be- oder Entladen des Fahrzeugaufbaus auf.

Nach einer weiteren vorteilhaften Ausgestaltung der Erfindung ist die Schiene aus einem mehrfach abgewinkelten Blech ausgebildet. Hierdurch werden der Herstellungsaufwand und folglich die damit verbundenen Herstellungskosten reduziert.

Ferner wird vorgeschlagen, dass die Schiene zumindest teilweise aus verzinktem Stahl oder Aluminium besteht. Die Schiene ist somit aufgrund ihres relativ geringen Gewichts ohne eine nennenswerte Erhöhung des zum Bewegen eines entsprechend ausgestatteten Fahrzeugaufbaus erforderlichen Kraftstoffverbrauchs bei unterschiedlichen Fahrzeugen einsetzbar.

Die obige Aufgabe wird des Weiteren durch einen Fahrzeugaufbau gelöst, der erfindungsgemäß eine Vorrichtung nach einer der vorbeschriebenen Ausgestaltungen oder einer beliebigen Kombination derselben aufweist.

Weitere Vorteile und Merkmale der vorliegenden Erfindung werden im Folgenden anhand der in den Figuren gezeigten Ausführungsbeispiele näher erläutert. Dabei zeigen
- Figur 1: einen Querschnitt eines Fahrzeugaufbaus mit erfindungsgemäßer Vorrichtung, und
- Figur 2: eine perspektivische Darstellung der in Figur 1 gezeigten Schiene.

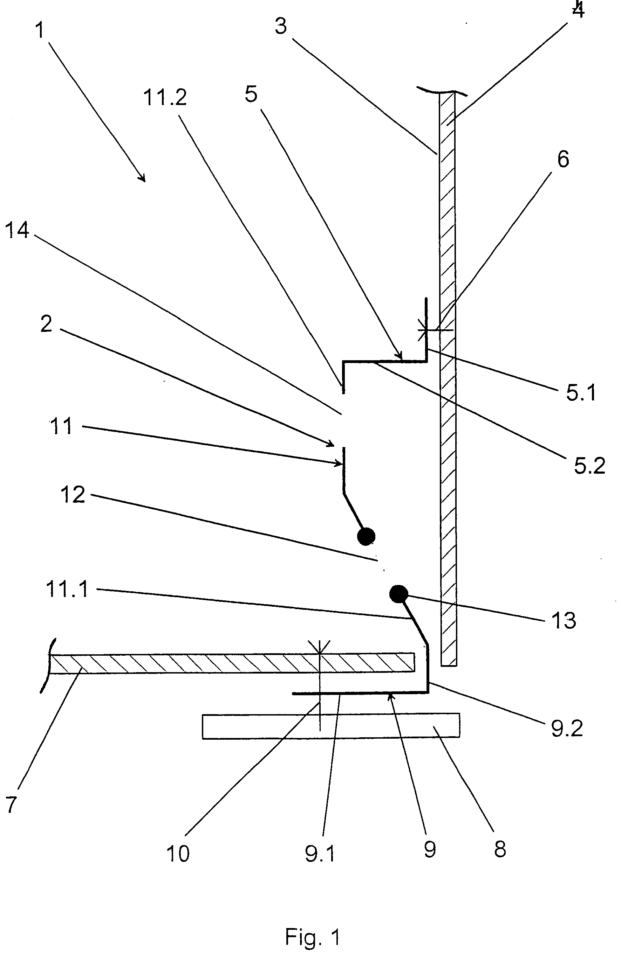

Figur 1 zeigt eine schematische Querschnittsdarstellung eines Fahrzeugaufbaus 1 mit einer erfindungsgemäßen Vorrichtung zum Sichern von Ladung auf der Ladefläche des Fahrzeugaufbaus 1. Die Vorrichtung weist eine zumindest über einen Teil der Längserstreckung des Fahrzeugaufbaus 1 verlaufende Schiene 2 auf. Die Schiene 2 weist einen sich über die Längserstreckung der Schiene 2 verlaufenden, an der Innenseite 3 der Seitenwand 4 des Fahrzeugaufbaus 1 befestigten oberen Befestigungsabschnitt 5 auf. Der obere Befestigungsabschnitt 5 ist über das Befestigungsmittel 6 fest mit der Seitenwand 4 verbunden. Zusätzlich oder alternativ kann der obere Befestigungsabschnitt 5 mit der Seitenwand 4 verklebt sein. Die Schiene 2 weist weiter einen über die Längserstreckung der Schiene 2 verlaufenden, mit dem Boden 7 des Fahrzeugaufbaus 1 und einem unter dem Boden 7 angeordneten Tragrahmenelement 8 verbundenen unteren Befestigungsabschnitt 9 auf. Das Tragrahmenelement 8 ist Bestandteil eines Tragrahmens des mit dem Fahrzeugaufbau 1 versehenen Fahrzeugs. Der unter Befestigungsabschnitt 9 ist über das Befestigungsmittel 10 fest sowohl mit dem Boden 7 als auch mit dem Tragrahmenelement 8 verbunden. Der obere Befestigungsabschnitt 5, welcher die Teilabschnitte 5.1 und 5.2 umfasst, ist über einen über die Längserstreckung der Schiene 2 verlaufenden Sicherungsabschnitt 11, welcher die Teilabschnitte 11.1 und 11.2 umfasst, mit dem unteren Befestigungsabschnitt 9, welcher die Teilabschnitte 9.1 und 9.2 umfasst, verbunden. Der Teilabschnitt 9.1 des unteren Befestigungsabschnitts 9 ist bei der gezeigten bestimmungsgemäßen Anordnung der Vorrichtung an dem Fahrzeugaufbau 1 unter dem Boden 7 des Fahrzeugaufbaus 1 angeordnet.

Der Sicherungsabschnitt 11 ist oberhalb des Bodens 7 angeordnet und weist einen über die Längserstreckung der Schiene 2 verlaufenden Zurrabschnitt 11.1 auf. Der Zurrabschnitt 11.1 weist an seinem oberen Ende einen größeren Abstand zur Seitenwand 4 des Fahrzeugaufbaus 1 auf als an seinem unteren Ende. An dem Zurrabschnitt 11.1 sind entlang seiner Längserstreckung mehrere Zurröffnungen 12 ausgebildet, von denen in Figur 1 lediglich eine dargestellt ist. Die Zurröffnungen 12 weisen an ihrem Rand Materialverdickungen 13 auf, welche die Formstabilität der Schiene 2 im Bereich der Zurröffnungen 12 deutlich erhöhen. Die Zurröffnungen 12 sind als Lochdüsen ausgebildet. Der Sicherungsabschnitt 11 weist weiter einen über die Längserstreckung der Schiene 2 verlaufenden Sperrabschnitt 11.2 auf. Der Sperrabschnitt 11.2 ist zwischen dem oberen Befestigungsabschnitt 5 und dem Zurrabschnitt 11.1 angeordnet. Der Sperrabschnitt 11.2 weist entlang seiner Längserstreckung mehrere Sperröffnungen 14 auf, von denen in Figur 1 nur eine zu sehen ist. Statt der rechteckigen Gestaltung der Sperröffnungen 14 kann auch eine runde oder anderweitig eckige gewählt werden. Der Sperrabschnitt 11.2 erstreckt sich in einer parallel und beabstandet zur Ebene der Seitenwand 4 des Fahrzeugaufbaus 1 angeordneten Ebene, in der das obere Ende des Zurrabschnitts 11.1 angeordnet ist. Wie der Figur 1 entnommen werden kann, ist die Schiene 2 einstückig und aus einem mehrfach abgewinkelten Aluminiumblech gebildet.

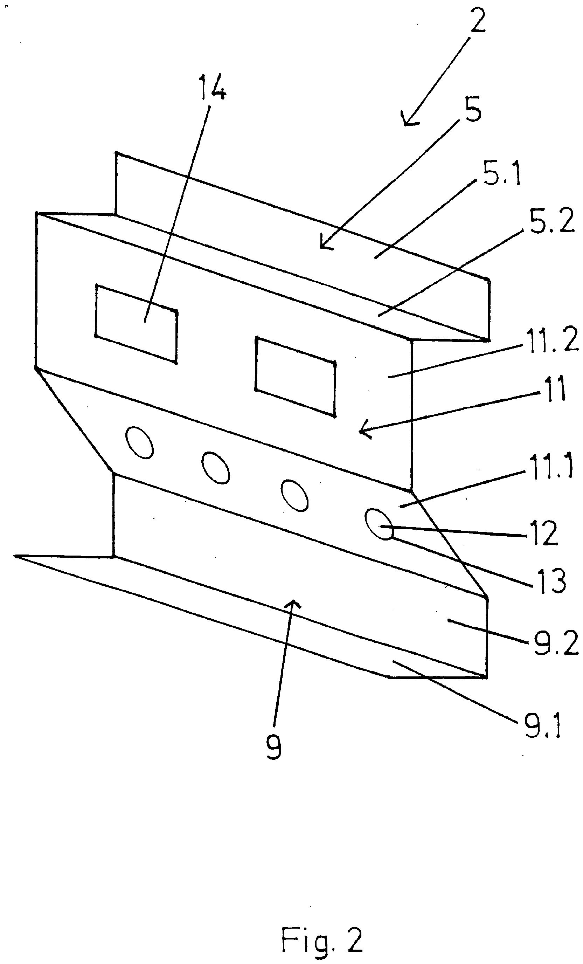

Figur 2 zeigt eine schematische und perspektivische Darstellung der in Figur 1 gezeigten Schiene 2. Im Gegensatz zur Figur 1 sind mehrere entlang der Längserstreckung des Zurrabschnitts 11.1 angeordnete Zurröffnungen 12 und mehrere entlang der Längserstreckung des Sperrabschnitts 11.2 angeordnete Sperröffnungen 14 zu sehen.

Die anhand der Figuren beschriebenen Ausführungsbeispiele dienen der Erläuterung sind nicht beschränkend.

## Patentansprüche

1. Vorrichtung zum Sichern von Ladung auf einer Ladefläche eines Fahrzeugaufbaus (1), aufweisend wenigstens eine zumindest über einen Teil der Längserstreckung des Fahrzeugaufbaus (1) verlaufende Schiene (2), die einen sich über die Längserstreckung der Schiene (2) verlaufenden, an der Innenseite (3) einer Seitenwand (4) des Fahrzeugaufbaus (1) befestigbaren oberen Befestigungsabschnitt (5) und einen über die Längserstreckung der Schiene (2) verlaufenden, mit dem Boden (7) des Fahrzeugaufbaus (1) und/oder einem unter dem Boden (7) angeordneten Tragrahmenelement (8) verbindbaren unteren Befestigungsabschnitt (9) umfasst, wobei der obere Befestigungsabschnitt (5) über einen über die Längserstreckung der Schiene (2) verlaufenden Sicherungsabschnitt (11) mit dem unteren Befestigungsabschnitt (9) verbunden ist, und wobei der untere Befestigungsabschnitt (9) bei bestimmungsgemäßer Anordnung der Vorrichtung an dem Fahrzeugaufbau (1) zumindest teilweise unter dem Boden (7) des Fahrzeugaufbaus (1) angeordnet ist,
**dadurch gekennzeichnet, dass** der Sicherungsabschnitt (11) bei bestimmungsgemäßer Anordnung der Vorrichtung an dem Fahrzeugaufbau (1) oberhalb des Bodens (7) angeordnet ist und einen über die Längserstreckung der Schiene (2) verlaufenden Zurrabschnitt (11.1) aufweist, der an seinem oberen Ende einen größeren Abstand zur Seitenwand (4) des Fahrzeugaufbaus (1) aufweist als an seinem unteren Ende, wobei an dem Zurrabschnitt (11.1) entlang seiner Längserstreckung mehrere Zurröffnungen (12) ausgebildet sind.

2. Vorrichtung nach Anspruch 1, **dadurch gekennzeichnet, dass** die Zurröffnungen (12) als Lochdüsen ausgebildet sind.

3. Vorrichtung nach Anspruch 1 oder 2, **dadurch gekennzeichnet, dass** der Sicherungsabschnitt (11) einen über die Längserstreckung der Schiene (2) verlaufenden Sperrabschnitt (11.2) aufweist, der zwischen dem oberen Befestigungsabschnitt (5) und dem Zurrabschnitt (11.1) angeordnet ist und der entlang seiner Längserstreckung mehrere Sperröffnungen (14) aufweist, wobei der Sperrabschnitt (11.2) sich in einer parallel und beabstandet zur Ebene der Seitenwand (4) der Fahrzeugaufbaus (1) angeordneten Ebene erstreckt, in der das obere Ende des Zurrabschnitts (11.1) angeordnet ist.

4. Vorrichtung nach einem der vorhergehenden Ansprüche, **dadurch gekennzeichnet, dass** die Schiene (2) aus einem mehrfach abgewinkelten Blech gebildet ist.

5. Vorrichtung nach einem der vorhergehenden Ansprüche, **dadurch gekennzeichnet, dass** die Schiene (2) aus verzinktem Stahl oder Aluminium besteht.

6. Fahrzeugaufbau (1), **gekennzeichnet durch** eine Vorrichtung nach einem der vorhergehenden Ansprüche.

## Claims

1. Device for securing loads on a load surface of a vehicle superstructure (1), having at least one rail (2) which runs across at least part of the longitudinal extent of the vehicle superstructure (1) and which comprises an upper fastening portion (5) that runs across the longitudinal extent of the rail (2) and is fastenable to the internal side (3) of a side wall (4) of the vehicle superstructure (1), and a lower fastening portion (9) that runs across the longitudinal extent of the rail (2) and is connectable to the floor (7) of the vehicle superstructure (1) and/or to a support frame element (8) that is disposed below the floor (7), wherein the upper fastening portion (5) by way of a securing portion (11) that runs across the longitudinal extent of the rail (2) is connected to the lower fastening portion (9), and wherein the lower fastening portion (9) in the intended disposal of the device on the vehicle superstructure (1) is disposed at least partially below the floor (7) of the vehicle superstructure (1),
**characterized in that**
the securing portion (11) in the intended disposal of the device on the vehicle superstructure (1) is disposed above the floor (7) and has a lashing portion (11.1) which runs across the longitudinal extent of the rail (2) and which (11.1) at the upper end thereof has a spacing from the side wall (4) of the vehicle superstructure (1) that is larger than said spacing at the lower end thereof, wherein a plurality of lashing openings (12) are configured on the lashing portion (11.1) along the longitudinal extent of the latter.

2. Device according to Claim 1, **characterized in that** the lashing openings (12) are configured as orifice nozzles.

3. Device according to either of Claims 1 and 2, **characterized in that** the securing portion (11) has a blocking portion (11.2) which runs across the longitudinal extent of the rail (2) and which (11.2) is disposed between the upper fastening portion (5) and the lashing portion (11.1), and which (11.2) along the longitudinal extent thereof has a plurality of blocking openings (14), wherein the blocking portion (11.2) extends in a plane that is disposed so as to be parallel with and spaced apart from that plane of the side wall (4) of the vehicle structure (1) in which the upper end of the lashing portion (11.1) is disposed.

4. Device according to one of the preceding claims, **characterized in that** the rail (2) is formed from a metal sheet that is angled multiple times.

5. Device according to one of the preceding claims, **characterized in that** the rail (2) is composed of galvanized steel or aluminium.

6. Vehicle superstructure (1) **characterized by** a device according to one of the preceding claims.

## Revendications

1. Dispositif de sécurisation d'un chargement sur une surface de chargement d'une caisse de véhicule (1), présentant au moins un rail (2) s'étendant au moins sur une partie de l'étendue longitudinale de la caisse de véhicule (1), qui comprend une portion de fixation supérieure (5) s'étendant sur l'étendue longitudinale du rail (2), pouvant être fixée au côté intérieur (3) d'une paroi latérale (4) de la caisse de véhicule (1), et une portion de fixation inférieure (9) s'étendant sur l'étendue longitudinale du rail (2), pouvant être reliée au fond (7) de la caisse de véhicule (1) et/ou à un élément de cadre de support (8) disposé sous le fond (7), la portion de fixation supérieure (5) étant reliée à la portion de fixation inférieure (9) par le biais d'une portion de sécurisation (11) s'étendant sur l'étendue longitudinale du rail (2), et la portion de fixation inférieure (9), lors d'un agencement conforme du dispositif sur la caisse de véhicule (1), étant disposée au moins en partie sous le fond (7) de la caisse de véhicule (1),
**caractérisé en ce que**
la portion de sécurisation (11), lors d'un agencement conforme du dispositif sur la caisse du véhicule (1), est disposée au-dessus du fond (7) et présente une portion d'arrimage (11.1) s'étendant sur l'étendue longitudinale du rail (2), qui présente au niveau de son extrémité supérieure une plus grande distance à la paroi latérale (4) de la caisse de véhicule (1) qu'au niveau de son extrémité inférieure, plusieurs ouvertures d'arrimage (12) étant réalisées au niveau de la portion d'arrimage (11.1) le long de son étendue longitudinale.

2. Dispositif selon la revendication 1, **caractérisé en ce que** les ouvertures d'arrimage (12) sont réalisées sous forme de buses perforées.

3. Dispositif selon la revendication 1 ou 2, **caractérisé en ce que** la portion de sécurisation (11) présente une portion de blocage (11.2) s'étendant sur l'étendue longitudinale du rail (2), qui est disposée entre la portion de fixation supérieure (5) et la portion d'arrimage (11.1) et qui présente plusieurs ouvertures de blocage (14) le long de son étendue longitudinale, la portion d'arrimage (11.2) s'étendant dans un plan parallèle au plan de la paroi latérale (4) de la caisse de véhicule (1) et espacé de celui-ci, dans lequel est disposée l'extrémité supérieure de la portion d'arrimage (11.1).

4. Dispositif selon l'une quelconque des revendications précédentes, **caractérisé en ce que** le rail (2) est formé d'une tôle coudée plusieurs fois.

5. Dispositif selon l'une quelconque des revendications précédentes, **caractérisé en ce que** le rail (2) se compose d'aluminium ou d'acier galvanisé.

6. Caisse de véhicule (1), **caractérisée par** un dispositif selon l'une quelconque des revendications précédentes.
